# EUROPÄISCHE PATENTSCHRIFT

(11) **EP 3 526 869 B1**
(45) Veröffentlichungstag und Bekanntmachung des Hinweises auf die Patenterteilung: **14.10.2026**
(21) Anmeldenummer: 17811196.9
(22) Anmeldetag: 15.11.2017
(51) Int. Cl.: H02H 3/38, H01H 39/00, H02H 7/12, F03D 9/25

(54) **LEISTUNGSELEKTRONIK MIT TRENNSICHERUNG**
POWER ELECTRONICS WITH ISOLATING FUSE
ÉLECTRONIQUE DE PUISSANCE À COUPE-CIRCUIT

(30) Priorität: 15.11.2016 DE 202016007006 U; 20.01.2017 DE 202017000338 U
(43) Veröffentlichungstag der Anmeldung: 21.08.2019
(73) Patentinhaber: Liebherr-Electronics and Drives GmbH, 88131 Lindau (DE)
(72) Erfinder: EICHLER, Markus, 79761 Waldshut (DE)
(74) Vertreter: Lorenz Seidler Gossel Part. mbB
(86) Internationale Anmeldenummer: PCT/EP2017/001337
(87) Internationale Veröffentlichungsnummer: WO 2018/091138

(56) Entgegenhaltungen:
- EP-A1- 2 573 928
- DE-A1- 102008 047 502
- US-A1- 2011 031 815
- US-A1- 2012 127 621
- US-A1- 2014 192 570

## Beschreibung

Die vorliegende Erfindung betrifft elektrische Antriebseinrichtungen mit zumindest einem Leistungselektronikmodul, das zumindest einen Spannungskreis mit leistungselektronischen Bauteilen wie Stromrichter, Umformer, Frequenzumrichter, Leistungskondensator, Leistungsschalter und dergleichen aufweist, sowie zumindest einer Sicherung zum Unterbrechen des Spannungskreises bei übermäßigen Strömen und/oder Spannungen. Die Erfindung betrifft ferner auch eine Windkraftanlage und ähnliche großindustrielle Elektroanlagen mit einer solchen Antriebseinrichtung.

Aus der Schrift US 2011/0031815 A1 ist eine Photovoltaikanlage mit mehreren in Reihe geschalteter Photovoltaikmodulen bekannt, die über Verbindungsleitungen mit den Eingangsklemmen eines Wechselrichters verbunden sind. Dabei ist in einer der genannten Verbindungsleitungen eine pyrotechnische Sicherung vorgesehen, die durch ein Steuersignal von einem spannungsabhängigen Widerstand ausgelöst werden kann, um bei Überspannungen eine Beschädigung der Photovoltaikmodule zu vermeiden. Auch die Schrift US 2012/0127621 A1 zeigt eine Photovoltaikanlage, deren Photovoltaikmodule durch eine pyrotechnische Sicherung abgesichert werden sollen. US 2012/0127621 A1 offenbart eine Schutzvorrichtung für Photovoltaikanlagen mit einer Dual-Path-Sicherung, bei der ein pyrotechnisches Trennelement bei Überstrom den Hauptstrompfad öffnet und der verbleibende Strom über einen parallelen Schmelzsicherungspfad bis zu dessen Abschmelzen geführt wird.

Ferner zeigt die Schrift EP 2 573 928 A1 eine Überstrombegrenzung und Rückstromsperre in einem Zwischenkreisumrichter zur Ansteuerung einer Wechselstrommaschine, wobei als Schutzschalter pyrotechnische Sicherheitsschalter verwendet werden. Ferner zeigt die DE 10 2008 047 502 A1 eine Vorrichtung zur Energieverteilung in einem Fahrzeug mit einem elektrischen Antriebsmotor, wobei ein elektrischer Zwischenkreis über mehrere Spannungswandler mit mehreren Energiequellen verbindbar ist. Zum irreversiblen Abtrennen der Spannungswandler vom Zwischenkreis sind pyrotechnische Sicherungen vorgesehen.

Industrielle Antriebseinrichtungen mit elektrischen Generatoren und/oder elektrischen Motoren erzeugen bzw. verarbeiten beträchtliche Leistungen, die regelmäßig im Megawatt-Bereich liegen können und einstellige oder zweistellige oder ggfs. gar dreistellige Megawatt-Zahlen erreichen können. Solche industriellen Hochleistungs-Antriebseinrichtungen sind bspw. in Windkraftanlagen verbaut, die Leistungen im Bereich einiger Megawatt bereitstellen können, wobei heutige Windkraftanlagen typischer Weise im Bereich von 2-8 Megawatt angesiedelt sind.

Mit solchen hohen Leistungen einhergehend ist eine entsprechend hohe Leistungsdichte in der Leistungselektronik solcher Antriebseinrichtungen handzuhaben, wobei dies regelmäßig auf engstem Raum bspw. in einem größenmäßig begrenzten Schaltschrank zu erfolgen hat. Beispielsweise wird bei Windkraftanlagen gefordert, das Umrichtersystem für eine 5 Megawatt-Anlage in einen Standardschaltschrank mit Abmessungen von 0,8 m x 2 m x 0,6 m Breite x Höhe x Tiefe zu verbauen, um die in einer Gondel sehr begrenzte Aufstellfläche einhalten zu können. Ähnliche Leistungsdichten sind nicht nur bei Windkraftanlagen, sondern auch anderen industriellen Antriebssystemen wie großen Industrieantrieben, Marineantrieben, aber auch Materialumschlagsgeräten wie Mining-Baggern, Mining-Trucks, Oberflächenfräsern und anderen Tagebaugeräten, oder auch Containerbrückenkranen und großen Baumaschinen wie Kranen zu verbauen.

Kommt es in der Leistungselektronik solcher Hochleistungsantriebe zu Fehlern, können durch explosionsartige Energieentladungen erhebliche mechanische Zerstörungen auftreten. Im Falle eines Fehlers eines der leistungselektronischen Bauteile - bspw. beim Ausfall eines Transistors wie eines IGBTs (Insulated Gate Bipolar Transistor), eines Leistungsschalters oder eines Stromrichters - kommt es zur schnellen Entladung der lokal gespeicherten Energie in den Zwischenkreiskondensatoren und/oder zu hohen Strömen durch die Einspeiseverbindung, die einen Netzanschluss mit nahezu unendlichem Energiefluss umfassen kann, aber auch von einem Generator her kommen kann. Diese hohen Energien führen zu explosionsartigen Energieentladungen bis hin zu Lichtbögen, die erhebliche mechanische Zerstörungen zur Folge haben und entsprechendes Gefährdungspotential haben.

Zum einen wird hierbei regelmäßig nicht nur das fehlerbefallene Bauteil selbst zerstört, sondern auch benachbarte Bauteile der Leistungselektronik, sodass der Schaden entsprechend groß ist. Zum anderen besteht die Gefahr, dass die Schaltschranktüren bei einem Lichtbogen aufgerissen werden und heißes Plasma austritt, wobei eventuelles Bedienpersonal verletzt werden kann. Um dies zu verhindern, werden die Schaltschränke deshalb bisweilen mit sehr massiven Konstruktionen verstärkt ausgeführt, um eine Störlichtbogenfestigkeit zu gewährleisten. Hinzu kommen regelmäßig lange Stillstandszeiten der Anlage und damit verbundene Ertrags- und Produktionsverluste.

Derartige Energieentladungen können nicht nur durch Fehler und Alterung der leistungselektronischen Bauteile selbst entstehen, sondern auch durch Unachtsamkeiten wie bspw. nicht festgeschraubte elektrische Verbindungen oder vergessene Werkzeuge, Schmutz, Feuchtigkeit oder Fremdkörper aller Art wie bspw. Tiere verursacht werden.

Um solche Schäden und Gefährdungen zu vermeiden, werden regelmäßig Sicherungen in die Spannungskreise eingebaut, um den Stromfluss zu unterbrechen, wenn übermäßige Ströme oder Spannungsschwankungen auftreten. Solche Sicherungen können mechanische Trennorgane wie Leistungsschalter umfassen, die jedoch 30 bis 70 Millisekunden oder sogar noch länger benötigen, um durch Öffnen den elektrischen Kreis zu unterbrechen, was bei sehr schnell ansteigenden Überströmen Schäden an benachbarten Bauteilen nicht verhindern kann. Zudem sind die üblichen, auf dem Markt verfügbaren Leistungsschalter in ihrer abschaltbaren Kurzschluss-Stromschaltfähigkeit recht begrenzt, bspw. auf Stromhöhen im Bereich von 85 bis 100 Kilo-Ampere, sodass es bei sehr hohen Leistungsdichten zum Versagen der Leistungsschalter kommen kann.

Die genannten Sicherungen können auch Schmelzsicherungen umfassen, die zwischen den Leistungselektronikmodulen verbaut sein können, um die explosionsartigen mechanischen Schäden an einem Leistungsmodul und deren benachbarten Bauteilen zu vermeiden. Allerdings erweist sich die Auslegung solcher Schmelzsicherungen zwischen IGBT-Modulen und Zwischenkreiskondensatoren oder zwischen einem DC-BUS und Zwischenkreiskondensatoren als sehr schwierig, da Stromspitzen beim Zuschalten der Zwischenkreise und im Betrieb möglich sein sollen, ohne dass die Schmelzsicherung auslöst. Direkt am IGBT angeschlossene Schmelzsicherungen erhöhen zudem konstruktionsbedingt die Streuinduktivität des elektrischen Kreises und mindern hierdurch die Ausnutzung der IGBT-Halbleiterbausteine.

Im Fehlerfall löst dabei regelmäßig die Sicherung, die am nächsten zur Fehlerstelle ist, nach der sicherungsspezifischen Kennlinie mit Zeiten im Bereich mehrerer Millisekunden aus. Dabei werden regelmäßig benachbarte Sicherungen durch den Überstrom und die Spannungsspitzen ebenfalls angeschmolzen, sodass sie bei der Reparatur vorsorglich komplett ersetzt werden müssen. Zudem kommt es bei den Schmelzsicherungen durch Überlaststromspitzen, die auch im Normalbetrieb auftreten, zur beschleunigten Alterung und ggfs. sogar zu einer Auslösung im Normalbetrieb, ohne dass ein Fehler in dem durch die Sicherung abgesicherten Bauteil vorliegt.

Andererseits wurde auch bereits vorgeschlagen, einen auftretenden Lichtbogen mittels optischer Sensorik zu erkennen und daraufhin einen dreiphasigen Kurzschluss an der Sammelschiene mittels einer pyrotechnischen Kurzschlusseinrichtung einzuleiten. Ein solches System kann die Lichtbogenentwicklung innerhalb des Sammelschienensystems sehr kurzfristig vermeiden. Nachteilig ist allerdings, dass ein sehr hoher Kurzschlussstrom durch die Sammelschiene fliest, bis der Leistungsnetzschalter den Sammelschienenkurzschluss vom Netz trennt. Zudem muss der Leistungsnetzschalter regelmäßig mehrere Tausend Ampere abschalten, wodurch der Leistungsnetzschalter einem sehr hohen Verschleiß unterliegt und evtl. ebenfalls ersetzt oder zumindest überprüft oder überholt werden muss. Ferner verursacht ein solche dreiphasiger Kurzschluss am Sammelschienensystem einen Spannungseinbruch auf dem Netz und kann das Auslösen weiterer Schutzeinrichtungen von benachbarten Energieversorgungskreisen herbeiführen.

Der vorliegenden Erfindung liegt daher die Aufgabe zugrunde, eine verbesserte elektrische Antriebseinrichtung der eingangs genannten Art zu schaffen, die Nachteile des Standes der Technik vermeiden und letzteren in vorteilhafter Weise weiterbilden kann. Insbesondere sollen fehlerhafte Komponenten der Leistungselektronik in einfacher und kostengünstiger Weise aus dem Hauptstromkreis herausgetrennt und Beschädigungen benachbarter oder anderer Bauteile vermieden werden, um ggfs. bei redundanter Ausbildung der Antriebseinrichtung einen Teilbetrieb bei reduzierter Leistung aufrechterhalten zu können und teure und aufwendige Reparaturarbeiten zu vermeiden. Gleichwohl soll eine hohe Sicherheit erreicht werden, ohne besondere Maßnahmen gegen Lichtbogengefährdung an der Schaltschrankeinhausung vornehmen zu müssen.

Erfindungsgemäß wird die genannte Aufgabe durch eine elektrische Antriebseinrichtung gemäß Anspruch 1 gelöst. Bevorzugte Ausgestaltungen der Erfindung sind Gegenstand der abhängigen Ansprüche.

**Es** wird vorgeschlagen, mehrere pyrotechnische Sicherungen unmittelbar benachbart zu den leistungselektronischen Bauteilen des Leistungselektronikmoduls anzuordnen. Dabei ist zumindest eine pyrotechnische Sicherung zwischen dem Kondensatorzwischenkreis und einem Gleichstromanschluss eines IGBT-Moduls, zumindest eine pyrotechnische Sicherung zwischen einem Generator und einem Stromrichter und zumindest eine pyrotechnische Sicherung zwischen einem Stromrichter und dessen Netzanschluss angeordnet.

Durch eine stromrichternahe Anordnung einer pyrotechnischen Sicherung kann der Energiefluss äußerst schnell, nämlich in weniger als einer Millisekunde unterbrochen werden und damit die mechanische Zerstörung benachbarter Bauteile vermieden werden, wobei die Trennung lokal am Fehlerort erfolgt und hohe Kurzschlussströme und Spannungseinbrüche im System der elektrischen Antriebseinrichtung und einem etwaigen, daran angeschlossenen Netz vermieden werden können. Erfindungsgemäß umfasst die Einrichtung mehrere pyrotechnische Sicherungen mit jeweils einem Treibsatz zum irreversiblen Unterbrechen des Spannungskreises, wobei die pyrotechnischen Sicherungen unmittelbar benachbart zu den leistungselektronischen Bauteilen angeordnet sind und zumindest eine pyrotechnische Sicherung zwischen dem Kondensatorzwischenkreis und einem Gleichstromanschluss eines IGBT-Moduls, zumindest eine pyrotechnische Sicherung zwischen einem Generator und einem Stromrichter des Leistungselektronikmoduls und zumindest eine pyrotechnische Sicherung zwischen einem Stromrichter des Leistungselektronikmoduls und dessen Netzanschluss angeordnet ist.

Durch die äußerst schnelle, lokale Trennung am Fehlerort können benachbarte Leistungselektronikbauteile vor Beschädigungen oder Alterung bewahrt werden, sodass ein kompletter Tausch aller Sicherungen des Antriebssystems vermieden werden kann.

Dabei ist der Platzbedarf solcher pyrotechnischer Sicherungen nicht größer oder sogar geringer als der Platzbedarf herkömmlicher Schmelzsicherungen. Dabei ist die Verlustleistung einer pyrotechnischen Sicherung signifikant - bspw. um den Faktor 2 bis 4 - geringer als die Verlustleistung einer Schmelzsicherung, sodass ein geringerer Kühlungsbedarf gegeben ist und geschlossene Schaltschränke Verwendung finden können. Zudem kann eine Erhöhung der Streuinduktivität des elektrischen Kreises wie sie bei der Verwendung von Schmelzsicherungen auftritt, vermieden werden, wodurch bspw. IGBT-Halbleiterbausteine besser ausgenutzt werden können.

Der Treibsatz der pyrotechnischen Sicherung, der bspw. eine Sprengkapsel umfassen kann, und ein Trennelement bspw. in Form eines Trennstößels zum Trennen des Strompfads antreibt, kann dabei grundsätzlich in verschiedener Weise gezündet bzw. aktiviert werden. Insbesondere kann der Treibsatz der pyrotechnischen Sicherung durch ein Trennsignal gezündet werden, das einen Fehler am Leistungselektronikmodul angibt und mit einer übermäßigen Spannungs- und/oder Stromschwankung am Leistungselektronikmodul einhergeht. Tritt eine übermäßige Spannungs- und/oder Stromschwankung am Leistungselektronikmodul und/oder einem damit verbundenen Anschluss wie einem Netzanschluss auf, löst die pyrotechnische Sicherung aus.

Dabei kann bei einem auftretender Überstrom am Leistungselektronikmodul und/oder dem damit verbundenen Anschluss selbst und/oder einem damit einhergehenden Spannungseinbruch zwischen Abschnitten des Spannungskreises des Leistungselektronikmoduls ein Signal generiert werden und/oder ein hierdurch induziertes Spannungssignal dazu dienen, den Treibsatz auszulösen, bspw. indem der Treibsatz an ein leistungselektronisches Bauteil oder eine damit verbundene Verbindung oder einen damit verbundenen Anschluss angebunden ist. In Weiterbildung der Erfindung kann der Treibsatz der zumindest einen pyrotechnischen Sicherung frei von externen Speisungen ausgelöst werden, insbesondere durch einen Strom und/oder eine Spannung am Leistungselektronikmodul, der bzw. die einen internen Fehler anzeigt.

Alternativ ist es jedoch ebenfalls möglich, ggfs. eine externe Speisung vorzusehen, die den Treibsatz auslöst und in Abhängigkeit eines Auftretens eines Fehlers am Leistungselektronikmodul, bspw. bei Auftreten einer übermäßigen Spannungs- und/oder Stromschwankung, auf den Treibsatz durchgeschaltet bzw. zu diesem geleitet wird.

Insbesondere kann dem Leistungselektronikmodul zumindest ein Spannungsmesser zugeordnet sein, der bspw. an zwei Abschnitte des Spannungskreises des Leistungselektronikmoduls angeschlossen sein kann und ein Spannungssignal bereitstellt, in Abhängigkeit dessen der Treibsatz der pyrotechnischen Sicherung ausgelöst wird. Der Spannungsmesser kann dabei derart ausgebildet sein, dass ein solches Spannungssignal nur bei einer übermäßigen Spannungsschwankung und/oder Stromschwankung , insbesondere einem übermäßigen Spannungsabfall abgegeben wird. Alternativ oder zusätzlich kann das vom Spannungsmesser bereitgestellte Spannungssignal ausgewertet und/oder verarbeitet werden, insbesondere dahingehend, dass das Spannungssignal dann, wenn es eine übermäßige Spannungsschwankung am Leistungselektronikmodul anzeigt, den Treibsatz auslöst.

Alternativ oder zusätzlich zu einem solchen Spannungsmesser kann auch ein Strommesser dem Leistungselektronikmodul und/oder einem damit verbundenen Anschluss zugeordnet sein, der bspw. an ein leistungselektronisches Bauteil oder einem damit verbundenen Anschluss angeschlossen sein und/oder den Strom messen kann, der in ein oder aus einem leistungslektronischen Bauteil fliest. Der genannte Strommesser kann ein Stromsignal bereitstellen, in Abhängigkeit dessen der Treibsatz gezündet wird, und/oder dazu ausgebildet sein, ein Stromsignal nur dann bereitzustellen, wenn am Leistungselektronikmodul oder einem damit verbundenen Anschluss ein vorbestimmter Überstrom auftritt.

In Weiterbildung der Erfindung kann der Treibsatz der pyrotechnischen Sicherung bspw. mit einer Spannung oder Strom aus einer Induktionsspule und/oder einem Kondensator des Leistungselektronikmoduls ausgelöst werden. Beispielsweise kann ein Leistungskondensator, der bspw. im Zwischenkreis des Leistungselektronikmoduls angeordnet sein kann, mit einer Induktionsspule als Zwischenlage isoliert ausgeführt sein, um bei einem vorbestimmten Stromfluss und/oder Stromanstieg im Zwischenkreis die pyrotechnische Sicherung mit einer Spannung aus der genannten Induktionsspule auszulösen. Tritt am Kondensator eine übermäßige Stromänderung auf, baut sich in der als Zwischenlage ausgebildeten Induktionsspule eine Spannung auf, die die pyrotechnische Sicherung auslösen kann. Alternativ oder zusätzlich kann ein solcher Leistungskondensator, der bspw. im Zwischenkreis der Leistungselektronik vorgesehen sein kann, auch mit Einzelspannungsmessungen bspw. in Form von Spannungsteilern an einzelnen Kondensatorbechern versehen sein, um bei Kurzschluss eines Kondensatorbechers sofort die pyrotechnische Sicherung auszulösen.

Unabhängig von der konkreten Auslösung des Treibsatzes durch externe Speisungen oder frei von externen Speisungen sind mehrere pyrotechnische Sicherungen an verschiedenen Abschnitten der Antriebseinrichtung vorgesehen und verschiedenen leistungselektronischen Bauteilen der Leistungselektronik zugeordnet. Beispielsweise kann eine pyrotechnische Sicherung zwischen einem Kondensatorzwischenkreis und einem Gleichspannungs-BUS vorgesehen oder an eine Verbindung zwischen dem genannten Kondensatorzwischenkreis und dem Gleichspannungs-BUS angeschlossen sein.

Erfindungsgemäß ist zumindest eine pyrotechnische Sicherung zwischen dem Kondensatorzwischenkreis und einem Gleichstromanschluss eines IGBT-Moduls des Leistungselektronikmoduls angeordnet.

Zusätzlich kann eine pyrotechnische Sicherung in einem Wechselspannungskreis und/oder in einem Gleichspannungskreis an einem Leistungselektronikmodul angeordnet sein.

Zusätzlich kann eine pyrotechnische Sicherung auch an einem Wechselspannungs-Eingangskreis und/oder an einem Wechselspannungs-Ausgangskreis vorgesehen sein.

Zusätzlich ist erfindungsgemäß zumindest eine pyrotechnische Sicherung zwischen einem Generator und einem Stromrichter des Leistungselektronikmoduls vorgesehen.

Zusätzlich ist erfindungsgemäß zumindest eine pyrotechnische Sicherung zwischen einem Stromrichter des Leistungselektronikmoduls und dessen Netzanschluss zum Anschluss an ein Stromnetz vorgesehen.

Die Erfindung wird nachfolgend anhand bevorzugter Ausführungsbeispiele und zugehöriger Zeichnungen weiter erläutert. In den Zeichnungen zeigen:
- Fig. 1:: Eine schematische Darstellung der elektrischen Antriebseinrichtung einer Windkraftanlage, bei der ein vom Rotorblatt antreibbarer Generator über ein Leistungselektronikmodul mit Frequenzumrichtern an ein Stromnetz anbindbar ist, wobei pyrotechnische Sicherungen an den Schnittstellen des Leistungselektronikmoduls vorgesehen sind,
- Fig. 2:: Eine schematische Darstellung eines Leistungselektronikmoduls, das als Leistungselektronische Bauelemente u.a. Zwischenkreiskondensatoren mit Induktionsschleifen, sowie Transistoren in Form von IGBT-Halbleiterbausteinen aufweist, wobei pyrotechnische Sicherungen an den Schnittstellen der leistungselektronischen Bauteile vorgesehen und in Abhängigkeit von Spannungsschwankungen an den Zwischenkreiskondensatoren und an deren Anschlüssen gezündet werden.
- Fig. 3:: Eine schematische Darstellung eines Schaltschranks mit Filtermodulen, wobei pyrotechnische Sicherungen an/in den Filtermodulen sowie an den Netzeinspeiseanschlüssen vorgesehen und durch ein selbstspeisendes Überstrom-Schutzrelais gezündet werden.
- Fig. 4:: Eine schematische Darstellung einer pyrotechnischen Sicherung mit einem Treibsatz 14 zum irreversiblen Trennen des Strompfads der Sicherung.

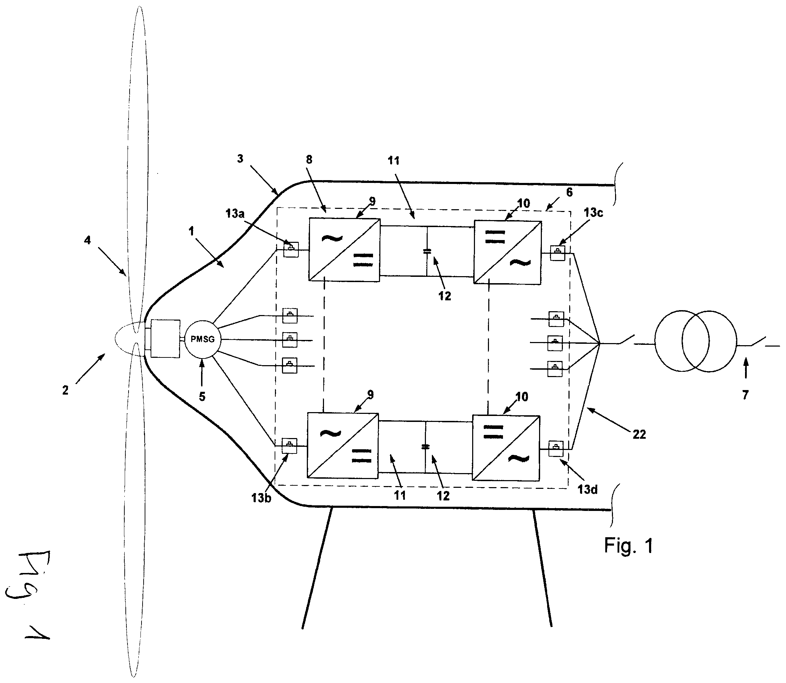

Wie Fig. 1 zeigt, kann die elektrische Antriebseinrichtung 1 Teil einer Windkraftanlage 2 und bspw. in die nur angedeutete Gondel 3 der Windkraftanlage 2 integriert bzw. dort aufgenommen sein. Eine solche Gondel 3 sitzt üblicher Weise um eine aufrechte Drehachse drehbar auf einem Turm und trägt den Rotor 4, der eine liegende Rotorwelle aufweisen kann und einen Generator 5 antreibt, der bspw. ein Permanentmagnet-Generator sein kann.

Wie Fig. 1 zeigt, kann der genannte Generator 5 der Antriebseinrichtung 1 über ein Leistungselektronikmodul 6 an ein Stromnetz 7 angebunden sein, um den vom Generator 5 produzierten Strom in das genannte Stromnetz 7 einzuspeisen.

Das genannte Leistungselektronikmodul 6 kann verschiedene leistungselektronische Bauelemente umfassen, bspw. Stromrichter 8 in Form von Gleichrichtern 9 und Wechselrichtern 10, die jeweils über einen Zwischenkreis 11 mit einem oder mehreren Kondensatoren 12 miteinander verbunden sein können.

Wie Fig. 1 zeigt, sind unmittelbar benachbart zu den leistungselektronischen Bauteilen des Leistungselektronikmoduls 6 pyrotechnische Sicherungen 13a, 13b, 13c und 13d vorgesehen, wobei die genannten pyrotechnischen Sicherungen unmittelbar an den Stromrichtern 8, also ohne Zwischenschaltung anderer Elemente und somit stromrichternah angeordnet sind.

In vorteilhafter Weise sind pyrotechnische Sicherungen 13a und 13b zwischen dem Generator 5 und den damit verbundenen Stromrichtern 8, insbesondere den gezeigten Gleichrichtern 9 in den Spannungskreis geschaltet. Zusätzlich sind pyrotechnische Sicherungen 13c und 13d zwischen dem Leistungselektronikmodul 6 und dem Netzanschluss an das Stromnetz 7 bzw. an den Anschlüssen des Leistungselektronikmoduls 6 zum Stromnetz 8 angeordnet. Wie Fig. 1 zeigt, sind die genannten pyrotechnischen Sicherungen 13c und 13d zwischen den Stromrichtern 8, insbesondere in Form der gezeigten Wechselrichter 10 und dem Netzanschluss zum Stromnetz 7 angeordnet.

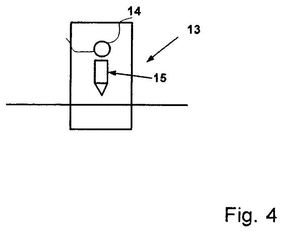

Die genannten pyrotechnischen Sicherungen 13 können, wie dies Fig. 4 zeigt, einen Treibsatz 14 umfassen, der ein bewegliches Trennelement 15 dazu veranlassen kann, den durch die Sicherung führenden Strompfad zu trennen und somit irreversibel zu unterbrechen. Der genannte Treibsatz 14 kann bspw. elektrisch gezündet werden, indem eine ausreichende Spannung und/oder ausreichender Strom auf den Treibsatz 14 gegeben wird oder selbsständig bei maximal einstellbar zulässigem Überstrom zünden.

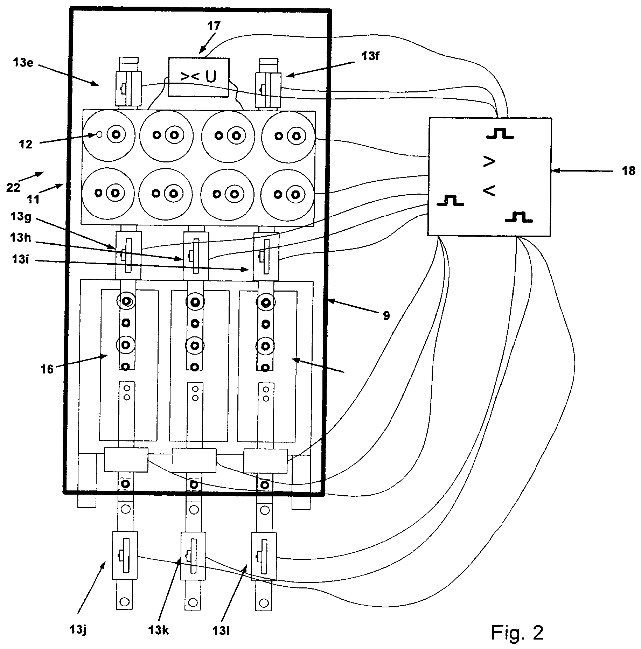

Wie Fig. 2 zeigt, umfasst das Leistungselektronikmodul 6 aus Fig. 1 weitere leistungselektronische Bauteile und weitere pyrotechnische Sicherungen 13. Wie Fig. 2 zeigt, können bspw. pyrotechnische Sicherungen 13e bis 13i unmittelbar an den Eingängen bzw. Ausgängen eines Zwischenkreiskondensators angeordnet sein, wobei auf der einen Seite des Zwischenkreises 11 die pyrotechnischen Sicherungen 13e und 13f an den Zwischenkreis- bzw. Kondensatoranschlüssen angeordnet sein können, während auf der anderen Seite des Zwischenkreises 11 die pyrotechnischen Sicherungen 13g, 13h und 13i zwischen den Zwischenkreiskondensator und den daran angeschlossenen IGBT-Halbleiterelementen angeordnet sind, vgl. Fig. 2.

Ferner können weitere pyrotechnische Sicherungen 13j, 13k und 13l den genannten Transistoren bzw. den genannten IGBT-Halbleiterbausteinen zugeordnet sein, und zwar auf der anderen Seite der genanntne IGBTs 16, die dem Zwischenkreis 11 abgewandt ist.

Die genannten pyrotechnischen Sicherungen 13e bis 13l können vorteilhafter Weise dazu eingerichtet sein, in Abhängigkeit von vorbestimmten Stromänderungen und/oder vorbestimmten Spannungsänderungen, die eine bestimmte Größe erreichen und in oder an dem Leistungselektronikmodul, insbesondere in oder an den leistungselektronischen Bauelementen auftreten, auszulösen bzw. gezündet zu werden, um hierdurch den Stromfluss zu trennen.

Wie bspw. Fig. 2 zeigt, kann mittels eines Spannungsmessers 17 die an den Anschlüssen des Kondensatorzwischenkreises 11 anliegende Spannung gemessen und in Form eines Spannungssignals an ein Auswertegerät 18 gemeldet werden, welches Auswertegerät 18 dann bei Auftreten vorbestimmter Spannungsschwankungen, insbesondere eines vorbestimmten Spannungseinbruchs, die pyrotechnischen Sicherungen zünden kann.

Das genannte Auswertegerät 18 kann auch an dem Kondensator 12 des Zwischenkreises 11 angebunden sein. Der genannte Kondensator 12 kann bspw. mit einer Induktionsspule als Zwischenlage isoliert ausgeführt werden, um bei einem festgelegten Stromanstieg di/dt im Zwischenkreis 11 die pyrotechnischen Sicherungen mit einer Spannung aus der Induktionsspule auszulösen. Dabei ist es auch möglich, Einzelspannungsmessungen z.B. mittels Spannungsteiler an den einzelnen Kondensatorbechern auszuführen, um bei Kurzschluss eines Kondensators ein entsprechendes Signal an das Auswertegerät 18 zu geben und die pyrotechnischen Sicherungen auszulösen.

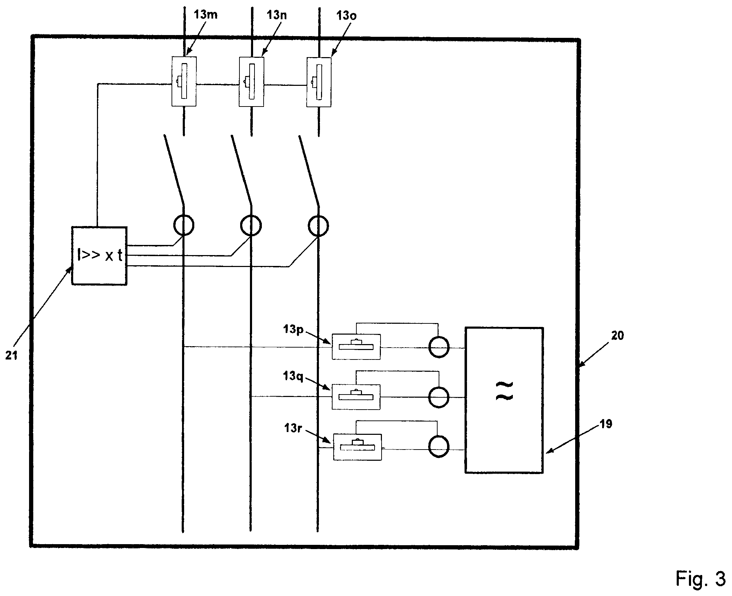

Wie Fig. 3 zeigt, können pyrotechnische Sicherungen 13m bis 13r auch in oder an Filtermodulen 19 vorgesehen sein bzw. in den damit verbundenen Spannungskreis geschaltet sein, welche Filtermodule 19 in einem nur angedeuteten Schaltschrank 20 untergebracht sein können. Der genannte Schaltschrank 20 kann bspw. ebenfalls in der Gondel 3 der Windkraftanlage 2 untergebracht sein, je nach Ausbildung der Antriebseinrichtung 1 jedoch auch an anderer Stelle vorgesehen sein.

Wie Fig. 3 zeigt, können das eine oder die mehreren Filtermodule 19 über ein selbspeisendes Überstrom-Schutzrelais 21 an Netzanschlüsse vor dem Leistungsschalter und/oder Netzlasttrenner zum Einspeisen in dem Stromnetz 7 angeschlossen sein. In Weiterbildung der Erfindung können dabei unmittelbar an dem einen oder mehreren Filtermodul 19 eine oder mehrere pyrotechnische Sicherungen 13p, 13q und 13r vorgesehen sein. Alternativ oder zusätzlich können an den Netzanschlüssen bzw. auf der dem Filtermodul 19 abgewandten Seite des Schutzrelais 21 eine oder mehrere pyrotechnische Sicherungen 13m, 13n und 13o vorgesehen sein.

Die unmittelbar am Filtermodul 19 angebrachten pyrotechnischen Sicherungen 13p, 13q und 13r können bspw. durch den Strom gezündet werden, der im Schaltkreis zwischen Filtermodul 19 und Schutzrelais 21 auftritt und bspw. eine vorbestimmte Größe überschreitet.

Alternativ oder zusätzlich können die netzanschlussseitigen pyrotechnischen Sicherungen 13m, 13n und 13o von dem Überstrom-Schutzrelais 21 angesteuert werden und von diesem ein Trennsignal empfangen, das auftritt, wenn am Überstrom-Schutzrelais 21 ein entsprechender Überstrom auftritt.

## Patentansprüche

1. Elektrische Antriebseinrichtung mit zumindest einem Leistungselektronikmodul (6), das zumindest einen Spannungskreis (22) mit zumindest einem Kondensatorzwischenkreis (11) sowie leistungselektronische Bauteile, insbesondere IGBT-Module, Stromrichter (8), Umformer, Frequenzumrichter, Leistungskondensatoren (12) und Schaltnetzteile aufweist, sowie zumindest einer Sicherung zum Unterbrechen des Spannungskreises bei übermäßigen Strömen und/oder vorbestimmten Spannungen, wobei die Sicherung zumindest eine pyrotechnische Sicherung (13) mit einem Treibsatz (14) zum irreversiblen Unterbrechen des Spannungskreises (22) aufweist,
**dadurch gekennzeichnet,**
**dass** zumindest die genannte pyrotechnische Sicherung (13) unmittelbar benachbart zu zumindest einem der leistungselektronischen Bauteilen des Leistungselektronikmoduls (6) angeordnet ist, so dass durch die unmittelbar benachbarte Anordnung ein Energiefluss in weniger als einer Millisekunde unterbrochen werden und damit die mechanische Zerstörung der leistungselektronischen Bauteile vermieden werden kann,
wobei zumindest eine der zumindest einen pyrotechnischen Sicherungen (13g, 13h, 13i) zwischen dem Kondensatorzwischenkreis und einem Gleichstromanschluss des IGBT-Moduls (16) des Leistungselektronikmoduls angeordnet ist,
wobei zumindest eine weitere der zumindest einen pyrotechnischen Sicherungen (13a, 13b) zwischen einem Generator (5) und einem Stromrichter des Leistungselektronikmoduls (8) vorgesehen ist,
wobei zumindest eine weitere der zumindest einen pyrotechnischen Sicherungen (13c, 13d) zwischen einem Stromrichter (8) des Leistungselektronikmoduls (6) und dessen Netzanschluss zum Anschluss an ein Stromnetz (7) vorgesehen ist.

2. Elektrische Antriebseinrichtung nach dem vorhergehenden Anspruch, wobei zumindest eine der zumindest einen pyrotechnischen Sicherungen (13) dazu eingerichtet ist, ein Trennsignal zu empfangen, das einen Fehler an dem Leistungselektronikmodul (6) angibt und mit einer übermäßigen Spannungs- und/oder Stromänderung am Leistungselektronikmodul (6) einhergeht, und in Abhängigkeit des empfangenen Trennsignals auszulösen und den Spannungskreis zu unterbrechen.

3. Elektrische Antriebseinrichtung nach einem der vorhergehenden Ansprüche, wobei der Treibsatz (14) frei von externen Speisungen auslösbar ausgebildet ist und dazu eingerichtet ist, von einem Stromanstieg und/oder einer Spannungsänderung in und/oder an dem Leistungselektronikmodul ausgelöst zu werden.

4. Elektrische Antriebseinrichtung nach dem vorhergehenden Anspruch, wobei der Treibsatz dazu eingerichtet ist, durch Strom und/oder Spannung aus einer Spule, die als Isolationsschicht in einem Zwischenkreiskondensator des Leistungselektronikmoduls (6) vorgesehen ist, gezündet zu werden und/oder durch ein Spannungs- und/oder Strommesssignal, das Spannung und/oder Strom am Zwischenkreiskondensator angibt, gezündet zu werden.

5. Elektrische Antriebseinrichtung nach einem der vorhergehenden Ansprüche, wobei zumindest eine der zumindest einen pyrotechnischen Sicherungen (13) dazu eingerichtet ist, durch zumindest eines der folgenden Ereignisse ausgelöst zu werden:
- einen vorbestimmten Abfall einer Zwischenkreisspannung und/oder einen vorbestimmten Anstieg eines Zwischenkreisstroms,
- einen vorbestimmten Überstrom an einem Stromrichter (8),
- eine vorbestimmte Spannung aus einer Zwischenkreisspule,
- einen vorbestimmten Strom an einem Zwischenkreiskondensator (12),
- einem vorbestimmten Lichtsignal durch ein Lichtbogenüberwachungsgerät,
- eine übermäßige Strom- und/oder Spannungsänderung an einem Netzanschluss und/oder Generator-/Motoranschluss des Leistungselektronikmoduls (6) auszulösen,
- einen vorbestimmten Überstrom an einem Netzleistungsschalter,
- einem Überstrom an einem Überstromschutzrelais (21) an einem Netzleistungsschalter,
- ein Signal eines Lichtbogenerfassungsgeräts zum Erfassen eines Lichtbogens.

6. Elektrische Antriebseinrichtung nach dem vorhergehenden Anspruch, wobei die zumindest eine der zumindest einen pyrotechnischen Sicherungen (13) dazu eingerichtet ist, bei mindestens drei oder mehreren der vorgenannten Ereignisse ausgelöst zu werden.

7. Elektrische Antriebseinrichtung nach einem der vorhergehenden Ansprüche, wobei zumindest eine der zumindest einen pyrotechnischen Sicherungen (13) in einem Wechselstromkreis oder einem Gleichstromkreis am Leistungselektronikmodul (6) angeordnet ist.

8. Elektrische Antriebseinrichtung nach einem der vorhergehenden Ansprüche, wobei zumindest eine der zumindest einen pyrotechnischen Sicherungen (13) zwischen dem Kondensatorzwischenkreis und einem Gleichstrom-Bussystem der elektrischen Antriebseinrichtung angeordnet ist.

9. Elektrische Antriebseinrichtung nach einem der vorhergehenden Ansprüche, wobei zumindest eine der zumindest einen pyrotechnischen Sicherungen (13) an einem Wechselstromeingangskreis der elektrischen Antriebseinrichtung und/oder an einem Wechselstromausgangskreis der elektrischen Antriebseinrichtung vorgesehen ist.

10. Windkraftanlage mit einem Rotor (4) zum Antreiben eines Generators (5) sowie einer elektrischen Antriebseinrichtung (1), die gemäß einem der vorhergehenden Ansprüche ausgebildet ist.

11. Materialumschlagsmaschine, insbesondere Oberflächenfräser oder Elektrobagger, mit einer elektrischen Antriebseinrichtung (1), die gemäß einem der Ansprüche 1-9 ausgebildet ist.

12. Baumaschine, insbesondere Kran oder Raupe oder Bagger, mit einer elektrischen Antriebseinrichtung (1), die gemäß einem der Ansprüche 1-9 ausgebildet ist.

13. Marineanlage, insbesondere Ölbohrplattform oder Schiff oder Containerkran oder Containerverladesystem, mit einer elektrischen Antriebseinrichtung, die gemäß einem der Ansprüche 1-9 ausgebildet ist.

## Claims

1. An electric drive device comprising at least one power electronics module (6), which comprises at least one voltage circuit (22) with at least one capacitor intermediate circuit (11) as well as power electronics components, in particular IGBT-modules, converters (8), transformers, frequency inverters, power capacitors (12) and switching power supplies, as well as at least one fuse for interrupting the voltage circuit in the event of excessive currents and/or predetermined voltages, wherein the fuse comprises at least one pyrotechnic fuse (13) with a propellant charge (14) for irreversibly interrupting the voltage circuit (22),
**characterized in that**
at least said pyrotechnic fuse (13) is arranged immediately adjacent to at least one of the power electronics components of the power electronics module (6), so that due to the immediately adjacent arrangement
an energy flow can be interrupted in less than one millisecond and thus the mechanical destruction of the power electronics components can be avoided, wherein at least one of the at least one pyrotechnic fuses (13g, 13h, 13i) is arranged between the capacitor intermediate circuit and a DC current connector of the IGBT-module (16) of the power electronics module,
wherein at least one further of the at least one pyrotechnic fuses (13a, 13b) is provided between a generator (5) and a converter of the power electronics module (8),
wherein at least one further of the at least one pyrotechnic fuses (13c, 13d) is provided between a converter (8) of the power electronics module (6) and its power connector for connection to a power grid (7).

2. The electric drive device according to the preceding claim, wherein at least one of the at least one pyrotechnic fuses (13) is adapted to receive a disconnection signal that indicates a defect at the power electronics module (6) and is accompanied by an excessive voltage and/or current change at the power electronics module (6), and to trigger in dependence on the received disconnection signal and to interrupt the voltage circuit.

3. The electric drive device according to one of the preceding claims, wherein the propellant charge (14) is configured to be triggerable free of external feeds and is adapted to be triggered by a current increase and/or a voltage change in and/or at the power electronics module.

4. The electric drive device according to the preceding claim, wherein the propellant charge is adapted to be ignited by current and/or voltage from a coil, which is provided as an insulation layer in an intermediate circuit capacitor of the power electronics module (6), and/or to be ignited by a voltage and/or current measurement signal that indicates voltage and/or current at the intermediate circuit capacitor.

5. The electric drive device according to one of the preceding claims, wherein at least one of the at least one pyrotechnic fuses (13) is adapted to be triggered by at least one of the following events:
- a predetermined drop of an intermediate circuit voltage and/or a predetermined increase of an intermediate circuit current,
- a predetermined excess current at a converter (8),
- a predetermined voltage from an intermediate circuit coil,
- a predetermined current at an intermediate circuit capacitor (12),
- a predetermined light signal by an arc monitoring device,
- to trigger an excessive current and/or voltage change at a power connector and/or generator/motor connector of the power electronics module (6),
- a predetermined excess current at a power circuit breaker,
- an excess current at an excess current protective relay (21) at a power circuit breaker,
- a signal of an arc detection device for detecting an arc.

6. The electric drive device according to the preceding claim, wherein the at least one of the at least one pyrotechnic fuses (13) is adapted to be triggered on at least three or more of the aforementioned events.

7. The electric drive device according to one of the preceding claims, wherein at least one of the at least one pyrotechnic fuses (13) is arranged in an AC current circuit or a DC current circuit at the power electronics module (6).

8. The electric drive device according to one of the preceding claims, wherein at least one of the at least one pyrotechnic fuses (13) is arranged between the capacitor intermediate circuit and a DC bus system of the electric drive device.

9. The electric drive device according to one of the preceding claims, wherein at least one of the at least one pyrotechnic fuses (13) is provided at an AC current input circuit of the electric drive device and/or at an AC current output circuit of the electric drive device.

10. A wind turbine with a rotor (4) for driving a generator (5) as well as an electric drive device (1), which is configured according to one of the preceding claims.

11. A material transfer machine, in particular a surface miner or electric excavator, with an electric drive device (1), which is configured according to one of claims 1-9.

12. A construction machine, in particular a crane or a crawler type vehicle or an excavator, with an electric drive device (1), which is configured according to one of claims 1-9.

13. A marine installation, in particular an oil drilling platform or a ship or a container crane or a container loading system, with an electric drive device, which is configured according to one of claims 1-9.

## Revendications

1. Dispositif d'entraînement électrique comprenant au moins un module d'électronique de puissance (6), qui comprend au moins un circuit de tension (22) avec au moins un circuit intermédiaire à condensateur (11) ainsi que des composants d'électronique de puissance, en particulier des modules IGBT, des convertisseurs de courant (8), des transformateurs, des convertisseurs de fréquence, des condensateurs de puissance (12) et des alimentations à découpage, ainsi qu'au moins un fusible pour interrompre le circuit de tension en cas de courants excessifs et/ou de tensions prédéterminées, dans lequel le fusible comprend au moins un fusible pyrotechnique (13) avec une charge propulsive (14) pour interrompre de manière irréversible le circuit de tension (22),
**caractérisé en ce que**
au moins ledit fusible pyrotechnique (13) est agencé de manière immédiatement adjacente à au moins un des composants d'électronique de puissance du module d'électronique de puissance (6), de sorte qu'en raison de l'agencement immédiatement adjacent
un flux d'énergie peut être interrompu en moins d'une milliseconde et que la destruction mécanique des composants d'électronique de puissance peut ainsi être évitée,
dans lequel au moins un des au moins un fusibles pyrotechniques (13g, 13h, 13i) est agencé entre le circuit intermédiaire à condensateur et un raccord de courant continu du module IGBT (16) du module d'électronique de puissance, dans lequel au moins un autre des au moins un fusibles pyrotechniques (13a, 13b) est prévu entre un générateur (5) et un convertisseur de courant du module d'électronique de puissance (8),
dans lequel au moins un autre des au moins un fusibles pyrotechniques (13c, 13d) est prévu entre un convertisseur de courant (8) du module d'électronique de puissance (6) et son raccordement au réseau pour le raccordement à un réseau électrique (7).

2. Dispositif d'entraînement électrique selon la revendication précédente, dans lequel au moins un des au moins un fusibles pyrotechniques (13) est conçu pour recevoir un signal de coupure qui indique un défaut sur le module d'électronique de puissance (6) et qui s'accompagne d'une variation excessive de tension et/ou de courant sur le module d'électronique de puissance (6), et pour se déclencher en fonction du signal de coupure reçu et pour interrompre le circuit de tension.

3. Dispositif d'entraînement électrique selon l'une des revendications précédentes, dans lequel la charge propulsive (14) est conçue pour pouvoir être déclenchée sans alimentations externes et est conçue pour être déclenchée par une augmentation de courant et/ou une variation de tension dans et/ou sur le module d'électronique de puissance.

4. Dispositif d'entraînement électrique selon la revendication précédente, dans lequel la charge propulsive est conçue pour être allumée par un courant et/ou une tension provenant d'une bobine, qui est prévue comme couche d'isolation dans un condensateur de circuit intermédiaire du module d'électronique de puissance (6), et/ou pour être allumée par un signal de mesure de tension et/ou de courant qui indique une tension et/ou un courant au niveau du condensateur de circuit intermédiaire.

5. Dispositif d'entraînement électrique selon l'une des revendications précédentes, dans lequel au moins un des au moins un fusibles pyrotechniques (13) est conçu pour être déclenché par au moins un des événements suivants :
- une chute prédéterminée d'une tension de circuit intermédiaire et/ou une augmentation prédéterminée d'un courant de circuit intermédiaire,
- une surintensité prédéterminée au niveau d'un convertisseur de courant (8),
- une tension prédéterminée provenant d'une bobine de circuit intermédiaire,
- un courant prédéterminé au niveau d'un condensateur de circuit intermédiaire (12),
- un signal lumineux prédéterminé par un appareil de surveillance d'arc électrique,
- déclencher une variation excessive de courant et/ou de tension au niveau d'un raccordement au réseau et/ou d'un raccordement de générateur/moteur du module d'électronique de puissance (6),
- une surintensité prédéterminée au niveau d'un disjoncteur de puissance de réseau,
- une surintensité au niveau d'un relais de protection contre les surintensités (21) sur un disjoncteur de puissance de réseau,
- un signal d'un appareil de détection d'arc électrique pour détecter un arc électrique.

6. Dispositif d'entraînement électrique selon la revendication précédente, dans lequel l'au moins un des au moins un fusibles pyrotechniques (13) est conçu pour être déclenché lors d'au moins trois ou plus des événements susmentionnés.

7. Dispositif d'entraînement électrique selon l'une des revendications précédentes, dans lequel au moins un des au moins un fusibles pyrotechniques (13) est agencé dans un circuit de courant alternatif ou un circuit de courant continu au niveau du module d'électronique de puissance (6).

8. Dispositif d'entraînement électrique selon l'une des revendications précédentes, dans lequel au moins un des au moins un fusibles pyrotechniques (13) est agencé entre le circuit intermédiaire à condensateur et un système de bus à courant continu du dispositif d'entraînement électrique.

9. Dispositif d'entraînement électrique selon l'une des revendications précédentes, dans lequel au moins un des au moins un fusibles pyrotechniques (13) est prévu au niveau d'un circuit d'entrée de courant alternatif du dispositif d'entraînement électrique et/ou au niveau d'un circuit de sortie de courant alternatif du dispositif d'entraînement électrique.

10. Éolienne avec un rotor (4) pour entraîner un générateur (5) ainsi qu'un dispositif d'entraînement électrique (1), qui est configuré selon l'une des revendications précédentes.

11. Machine de manutention de matériaux, en particulier une fraiseuse de surface ou une pelle électrique, avec un dispositif d'entraînement électrique (1), qui est configuré selon l'une des revendications 1-9.

12. Engin de chantier, en particulier une grue ou un véhicule à chenilles ou une pelle, avec un dispositif d'entraînement électrique (1), qui est configuré selon l'une des revendications 1-9.

13. Installation marine, en particulier une plateforme de forage pétrolier ou un navire ou une grue à conteneurs ou un système de chargement de conteneurs, avec un dispositif d'entraînement électrique, qui est configuré selon l'une des revendications 1-9.
